(19) Europäisches Patentamt
European Patent Office
Office européen des brevets

(11) Publication number: **0 431 493 A2**

# (12) EUROPEAN PATENT APPLICATION

(21) Application number: **90122962.5**

(51) Int. Cl.$^5$: **G06K 19/077**

(22) Date of filing: **30.11.90**

(30) Priority: **04.12.89 JP 314925/89**
**30.01.90 JP 20138/90**

(43) Date of publication of application:
**12.06.91 Bulletin 91/24**

(84) Designated Contracting States:
**DE GB**

(71) Applicant: **KONICA CORPORATION**
**26-2, Nishishinjuku 1-chome, Shinjuku-ku**
**Tokyo 160(JP)**

(72) Inventor: **Komamura, Tawara, Konica Corporation**
**1 Sakura-machi**
**Hino-shi, Tokyo(JP)**
Inventor: **Nimura, Takao, Konica Corporation**
**1 Sakura-machi**
**Hino-shi, Tokyo(JP)**

(74) Representative: **Henkel, Feiler, Hänzel & Partner**
**Möhlstrasse 37**
**W-8000 München 80(DE)**

## (54) Method of preparing an IC card, and the apparatus for preparing the same.

(57) A method and an apparatus for preparing an IC card are disclosed. The method comprises the steps of;

a) exposing imagewise a light-sensitive material to form a latent image,

b) superposing the exposed material on an image receiving material comprising an image receiving layer,

c) developing the superimposed material to form an image by applying heat,

d) transferring the image formed in the light-sensitive material to the image receiving layer by applying heat and pressure,

e) seperating an image receiving material comprising an image receiving layer having the transferred image from the superimposed material, and

f) adhering the image receiving material comprising the image receiving layer having the transferred image to a card comprising a built-in IC device.

EP 0 431 493 A2

# METHOD OF PREPARING AN IC CARD, AND THE APPARATUS FOR PREPARING THE SAME

## FIELD OF THE INVENTION

This invention relates to a method forpreparing an image-affixed IC card being used as an image-affixed ID card and the like, and the apparatus for preparing the image-affixed IC cards.

## BACKGROUND OF THE INVENTION

There have been the practical use of an IC card having a built-in IC device including an LSI device capable of writing and reading with a magnetic signal, thereby memorizing an information.

On the other hand, when using an IC card for an ID card such as a student's identification card or a driver's license, the registered principal of the card and the bearer thereof should be identified. For this purpose, an IC card affixed thereto a portrait of the principal is disclosed in, for example, Japanese Patent Publication Open to Public Inspection -hereinafter referred to as Japanese Patent O.P.I. Publication- No. 62-240593/1987.

However, the conventionally known image-affixed IC cards have the following problems. An image formation is complicated, because the image is formed on a sheet of color printing paper, and the structure of the card is so complicated that the cost of the card production is increased, because an over-sheet has to be formed on the color printing paper.

Further, when using the card as an ID card, it is essential to prevent an image from being replaced by another. However, the conventional cards have the disadvantage that the replacement of image cannot completely be prevented, because the image formed on a color printing paper may readily be replaced.

This invention was achieved by taking the above-described points into consideration. It is, therefore, an object of the invention to provide IC cards each affixed thereto a high-quality image, which can readily be prepared continuously in mass-production to be simple in structure and excellent in falsification prevention; the method of preparing the same; and the apparatus for preparing the same.

## SUMMARY OF THE INVENTION

As the results of the energetic studies, the above-described objects of the invention can be achieved with a method for preparing an IC card comprising the steps of;

a) exposing imagewise a light-sensitive material to form a latent image,

b) superposing the exposed material on an image receiving material comprising an image receiving layer,

c) developing the superimposed material to form an image by applying heat,

d) transferring the image formed in the light-sensitive material to the image receiving layer by applying heat and pressure,

e) separating an image receiving material comprising an image receiving layer having the transferred image from the superimposed material, and

f) adhering the image receiving material comprising the image receiving layer having the transferred image to a card comprising a built-in IC device or a method for preparing an IC card comprising the steps of;

a) superposing an image transfer material comprising a colorant capable of being transferred by applying heat on an image receiving material comprising an image receiving layer,

b) forming an image in the image transfer material by heating imagewise,

c) transferring the image formed in the image transfer material to the image receiving layer by applying heat and pressure,

d) separating an image receiving material comprising an image receiving layer having the transferred image from the superimposed material, and

f) adhering the image receiving material comprising the image receiving layer having the transferred image to a card comprising a built-in IC device.

Further, in the invention of the apparatus of preparing the image-affixed IC card, there provides the following means; a means for forming an image in an image receiving material comprising an image receiving layer, and a means for adhering the image receiving material having the formed image to a card comprising a built-in IC device.

## BRIEF DESCRIPTION OF THE DRAWINGS

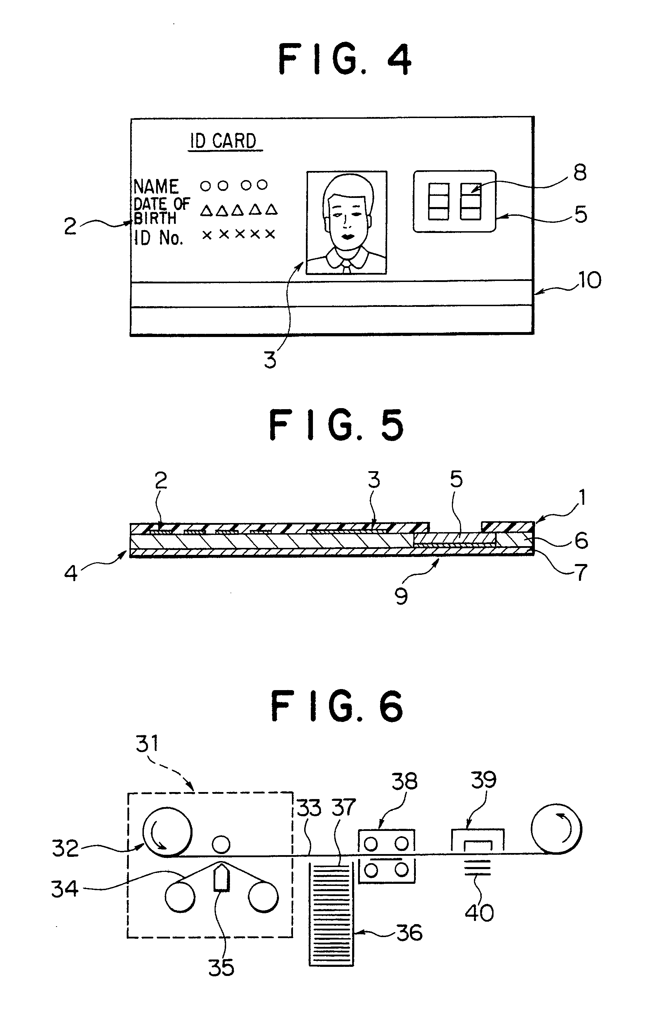

Figs. 1 through 3 illustrate the image-affixed IC card, the image-affixed IC card preparing method, and the image-affixed IC card preparing apparatus. Fig. 1 is a plan of the IC card; Fig. 2 is a cross-sectional view of the IC card; Fig. 3 is a schematic illustration of the image-affixed IC card preparing apparatus. Figs. 4 through 6 illustrate the image-affixed IC card, the image-affixed IC card preparing method; and the image-affixed IC card preparing apparatus subject to the IC card and the preparing method. Fig. 4 is a plan of the IC card; Fig. 5 is the cross-sectional view of the IC card; and Fig. 6 is the schematic illustration of the image-affixed IC card preparing apparatus.

In the figures, 1, 12 and 33 each are the image-receiving materials; 4 is the IC card; 5 is the IC device; 11 is the thermal development section; 31 is the thermosensitive transfer section; 14 is the light-sensitive material; 34 is the thermosensitive transfer material; 23 and 38 are each the adhering sections; 24 and 39 are each the die-cutting machines; and 25 and 40 are each the IC cards.

## .DETAILED DESCRIPTION OF THE INVENTION

This invention relates to a photographic image-affixed IC card formed into a unit body by bringing a thermoplastic resin having the photographic image thereon into contact with the IC card having the built-in IC device. Therefore, the photographic image and the IC card cannot be damaged and the photographic image and the IC card are hardly be peeled from each other, so that the falsification prevention of the IC card can be excellent.

In the invention, the image-affixed IC card is prepared into a unit body by bringing the image-receiving material having the image formed thereon in a heat-development into contact with the IC card having the built-in IC device. It is, therefore, very hard to peel the image away from the IC card and ready to prepare a high-quality image-affixed IC card to be excellent in falsification prevention. In addition, the mass-production of such excellent cards can also be performed continuously.

In the invention, the image-affixed IC card is heated to transfer the image onto the image-receiving material, and the resulting image-receiving material having the image and the IC card having the built-in IC device are brought into pressure contact with each other, so as to form into a unit body. It is, therefore, very hard to peel the image and the IC card away from each other and the high-quality image-affixed IC card can readily be prepared to be excellent in falsification prevention. In addition, the mass-production thereof can be performed continuously.

In the invention, an image can be formed on an image-receiving material in a simple structure, and the image-receiving material having the image thereon and an IC card having a built-in IC device can be brought into pressure contact with each other, so that the mass-production thereof can be performed continuously.

## EXAMPLES

The examples of the invention will now be detailed with reference to the drawings attached hereto.

Figs. 1 through 3 illustrate the image-affixed IC card of the invention, the image-affixed IC card preparing method of the invention, and the image-affixed IC card preparing apparatus of the invention. Among them, Fig. 1 is the plan of the IC card, Fig. 2 is the cross-sectional view of the IC card, and Fig. 3 is the schematic view of the image-affixed IC card preparing apparatus.

In the figures, referential numeral 1 is an image-receiving material having an image thereon, and the image-receiving material comprising a thermoplastic resin is preferably used. The thermoplastic resins include, for example, polymers such as polyvinyl chlorides, polyesters, polycarbonates and polyethylenes. They may be homopolymers, copolymers such as a vinyl chloride-vinyl acetate copolymer or polymers blended with two or more kinds of polymers. These polymers may also contain plasticizers such as the esters or amides of higher fatty acids. The thermoplastic resins are preferable to have substantially the same structures as those of the resins for forming IC card 4 so as to make effective the adhesion of the resins to the materials for forming IC card 4. The expression, '-- substantially the same --', herein means the polymers composed of monomer units in which the same monomer unit are contained in an amount of not less than 50 wt% in the polymers. The particularly preferable thermoplastic resins include a polyvinyl chloride. The thermoplastic resins may be provided in the form of a layer coated on a suitable transparent support such as that made of a polyethyleneterephthalate film or they may serve as a support by themselves. The layer thickness of the thermoplastic resin is desirably within the range of 5 to 200

For the image stabilization and falsification prevention, it is preferable that the images including letter

image 2 and portrait image 3 are to be formed in the form of a mirror image on image-receiving material, and the surface having the image thereon and the surface of IC card 4 are brought into pressure contact with each other.

As shown in Fig. 2, IC card 4 comprises IC device 5, card material 6 having a circular opening and cover sheet 7. Among the above components, IC device 5 are well-known, because it is usually comprised of a semiconductor packaged with a ceramic and a ROM for electrically memorizing an information. On the surface of IC device 5, a plurality of contacts 8 are formed. Card material 6 is of a white resin that is, preferably, a white polyvinyl chloride. Cover sheet 7 is of a white or transparent resin, that is, preferably, a polyvinyl chloride. For providing a writability on the back surface, it is allowed to bring a sheet of paper into contact with cover sheet 7 through an adhesive layer. Card material 6 and cover sheet 7 are brought into contact with each other through a fusible or heat-sealable adhesive layer. Cover sheet 7 and IC device 5 are also brought into contact with each other through heat-sealable adhesive layer 9.

IC card 4 and thermoplastic resin having a photographic image thereon are adhered to each other by fusing or through an adhesive layer. For making the falsification prevention more effective, it is preferable that they are brought into contact with each other by fusing them. In the figures, 10 is a magnetic stripe provided if required.

Next, referring to Fig. 3, the descriptions will be made on the typical examples of the image-affixed IC card preparing apparatus and the image-affixed IC card preparing method to be carried out with the apparatus.

In Fig. 3, 11 is a thermally developing section, whereto providing supply-roll section 13 for supplying image-receiving material 12 containing a thermoplastic resin. Facing image-receiving material 12, light-sensitive material 14 is transported and supplied from supply-roll section 15, so that it is wound round take-up roll 16. On light-sensitive material 14, a latent image is formed by making an exposure imagewise to exposing means 17, and the light-sensitive material 14 having the latent image is superposed on image-receiving material 12 at developing transferring section 20. They are brought into pressure contact with each other by heating, so that the latent image is developed and is then transferred to image-receiving material 12. After then, light-sensitive material 14 and image-receiving material 12 are peeled away from each other.

The image is formed on image-receiving material 12 in the above-described manner. Image-receiving material 12 containing the thermoplastic resin and having the formed image is superposed on fresh IC card 22 in fresh IC card supplying section 21 and they are then supplied to adhesion section 23 having a adhering means. In the method of making the adhesion of image-receiving material 12 containing the thermoplastic resins and having the image and fresh IC card 22 to each other to be in a unit body, the heat and pressure are supplied, for example, by taking a time within the range of 1 to 30 seconds at a heating temperature within the range of 120 to 150 °C and at a pressure within the range of 10 to 15 $kg/cm^2$.

After the adhesion thereof are completed, the image-affixed IC card is naturally or forcibly cooled down and is then die-cut by die-cutting machine 24 having a die-cutter, so that photographic image-affixed IC card 25 can be prepared. In advance of supplying fresh IC card 22 from fresh IC card supplying section 21 to adhering section 23, a part of the information on a specific person may be written in fresh IC card 22, according to the photographic image information.

Figs. 4 through 6 show the image-affixed IC card of the invention, the method of preparing an image-affixed IC card of the invention, and the image-affixed IC card preparing apparatus of the invention. Among the figures, Fig. 4 is the plan of an IC card, Fig. 5 is the cross-sectional view of an IC card, and Fig. 6 is the schematic illustration of an Image-affixed IC card preparing apparatus.

In the figures, 1 is an image-receiving material. Image-receiving material 1 has letter image 2 and portrait image 3. Image-receiving material 1 is either made of a thermoplastic resin or comprised of a layer made of a thermoplastic resin on a support. The components of image-receiving material 1 are so selected as to meet the materials of an IC card. Therefore, IC card 4 and image-receiving material 1 may readily be made adhered to each other. In the adhesion of IC card 4 and image-receiving material 1, the adhesive surface of image-receiving material 1 may be opposite to the image-receiving surface that comes into close contact with an image-forming material when forming an image and, in the case of image-receiving material having an image-receiving layer on a support, that is an image-receiving layer surface. However, the image-receiving surface is preferable to be the adhesive surface, from the viewpoint of the preservability of an image formed.

In an image-receiving layer, or an image-receiving layer in the case that image-receiving material 1 has an image-receiving layer on a support, the principal component having a proportion of not less than 50 wt% of the whole component of image-receiving material 1 is preferable to be the same as the principal component having not less than 50 wt% of the whole component of the material for forming IC card 4.

The desired materials for forming image-receiving material 1 include, for example, a polyester, a polyvinyl chloride, and a polycarbonate, and, in the case that the image-receiving material is comprised of a support and an image-receiving layer, the material of the image-receiving layer is a thermoplastic resin. These materials may be a homopolymer, a copolymer such as a vinyl chloride and vinyl acetate copolymer, or a polymer blended with two or more kinds thereof. These polymera are also allowed to contain a plasticizer such as the esters or amides of a higher fatty acid. As for the supports applicable to the case that image-receiving material 1 has a support, anyone of transparent or opaque supports may be used. They include, for example, the film supports made of polyethyleneterephthalate, polycarbonate, polystyrene, polyvinyl chloride, polyethylene or polypropylene and the supports containing a pigment such as titanium oxide, barium sulfate, calcium carbonate or talc.

On the other hand, card material 6 and cover sheet 7 each of IC card 4 may be selected from the resins such as polyethyleneterephthalate, polycarbonate, polystyrene, polyvinyl chloride, polyethylene, polypropylene and polyesters.

Next, referring to Fig. 6, the descriptions will now be detailed on the typical examples of the image-affixed IC card preparing apparatur and the image-affixed IC card preparing method in which the apparatus is to be used.

In the figures, 31 is a thermosensitive transfer section to which image-receiving material 33 is supplied from supply-roll section 32. Image-receiving material 33 is superposed on thermosensitive transfer material 34, and they are heated by thermal head 35 according to an image information, so that an image may be formed on image-receiving material 33 to meet the relation between the image information and a mirror image.

Thermosensitive transfer material 34 was prepared in the following method. A 4.5 μm-thick polyethyleneterephthalate film was provided with a nitrocellulose layer containing a silicone-denatured urethane resin, SP-2105 manufactured by Dainichi Seika Co. as an antisticking layer onto the surface thereof opposite to a dye-coated layer. On the resulting film support, a uniform dye solution comprising 10 g of the following Dye A, 15 g of nitrocellulose and 400 mℓ of methylethyl ketone, a uniform dye solution comprising 10 g of the following Dye B, 15 g of nitrocellulose and 400 mℓ of methylethyl ketone, and a uniform dye solution comprising 10 g of the following Dye C, 15 g of nitrocellulose and 400 mℓ of methylethyl ketone were each repeatedly coated in this order so as to coat in a proportion of 1 $g/m^2$, respectively, thereby preparing the thermosensitive transfer material.

Dye A

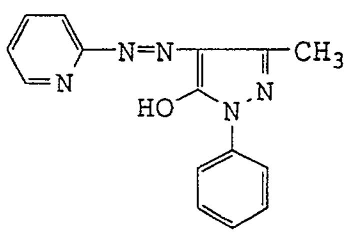

Dye B

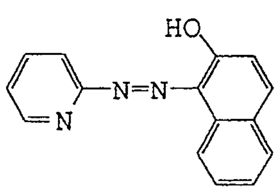

Dye C

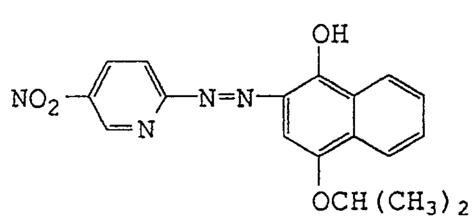

Image-receiving material 33 was prepared in the manner that 10 $g/m^2$ of polyvinyl chloride containing 4

$g/m^2$ of the following compound were coated on a 100 μm-thick polyethyleneterephthalate base.

$Ni^{2+}(NH_2CH_2CONH_2)_3(\phi_4B)_2$

The imaged surface of the resulting image-affixed image-receiving material 33 was brought into close contact with fresh IC card 37 supplied from fresh IC card supplying section 36. They were laminated in adhering section 38 and die-cut by die-cutting machine 39, so that image-affixed IC card 40 could be prepared.

## ADVANTAGES OF THE INVENTION

As described above, according to the invention the image is provided to the image-receiving material brought into close contact with the IC device of the IC card. Therefore, the image and IC card cannot be damaged and can hardly be peeled apart, so that the falsification can excellently be prevented.

The image-affixed IC card of the invention can be prepared into a unit body by bringing both of the image-receiving material having the thermally developed image and the IC card having the built-in IC device into contact with each other. Therefore, the image and the IC card cannot be peeled apart and the high-quality and excellent falsification preventive image-affixed IC card can readily be prepared. In addition, the mass-production thereof can be performed continuously.

Further, according to the invention, the image is formed on the image-receiving material by thermally transferring, and the image-receiving material having the transferred image and the IC card having the built-in IC device are brought into close contact with each other to be in a unit body. Therefore, the excellently falsification preventive and high-quality image-affixed IC card can readily be prepared. In addition, the mass-production thereof can be performed continuously.

## Claims

**1.** A method for preparing an IC card comprising the steps of;
a) exposing imagewise a light-sensitive material to form a latent image,
b) superposing the exposed material on an image receiving material comprising an image receiving layer,
c) developing the superimposed material to form an image by applying heat,
d) transferring the image formed in the light-sensitive material to the image receiving layer by applying heat and pressure,
e) seperating an image receiving material comprising an image receiving layer having the transferred image from the superimposed material, and
f) adhering the image receiving material comprising the image receiving layer having the transferred image to a card comprising a built-in IC device.

**2.** The method of claim 1, wherein said developing and said transferring are conducted at the same time.

**3.** The method of claim 1, wherein said adhering is conducted by fusing with heat or through an adhesive layer.

**4.** The method of claim 3, wherein said adhering is conducted by fusing with heat.

**5.** The method of claim 1, wherein said adhering is conducted through said image receiving layer having the transferred image.

**6.** The method of claim 1, wherein said heat and pressure are conducted at a temperature within the range of 120 to 150 °C and at a pressure within the range of 10 to 15 $kg/cm^2$ for 1 to 30 seconds.

**7.** The method of claim 1, wherein said image receiving layer is a layer of a thermoplastic resin.

**8.** The method of claim 7, wherein said thermoplastic resin includes polyvinylchlorides, polyesters, polycarbonates or polyethylenes.

**9.** The method of claim 7, wherein said thermoplastic resin includes polyvinylchlorides.

**10.** The method of claim 7, wherein said thermoplastic resin is substantially the same as a second thermoplastic resin of said card comprising a built-in IC device.

**11.** The method of claim 7, wherein a thickness of said layer of said thermoplastic resin is in a range of from 5 to 200 $\mu$ m.

**12.** A method for preparing an IC card comprising the steps of;
a) superposing an image transfer material comprising a colorant capable of being transferred by applying heat on an image receiving material comprising an image receiving layer,
b) forming an image in the image transfer material by heating imagewise,
c) transferring the image formed in the image transfer material to the image receiving layer by applying heat and pressure,
d) seperating an image receiving material comprising an image receiving layer having the transferred image from the superimposed material, and
e) adhering the image receiving material comprising the image receiving layer having the transferred image to a card comprising a built-in IC device.

**13.** The method of claim 12, wherein said forming and said transferring are conducted at the same time.

**14.** The method of claim 12, wherein said adhering is conducted by fusing with heat or through an adhesive layer.

**15.** The method of claim 14, wherein said adhering is conducted by fusing with heat.

**16.** The method of claim 12, wherein said adhering is conducted through said image receiving layer having the transferred image.

**17.** The method of claim 12, wherein said heat and pressure in step c) are conducted at a temperature within the range of 120 to 150 °C and at a pressure within the range of 10 to 15 kg/cm$^2$ for 1 to 30 seconds.

**18.** The method of claim 12, wherein said image receiving layer is a layer of a thermoplastic resin.

**19.** The method of claim 18, wherein said thermoplastic resin includes polyvinylchlorides, polyesters, polycarbonates or polyethylenes.

**20.** The method of claim 18, wherein said thermoplastic resin includes polyvinylchlorides.

**21.** The method of claim 18, wherein said thermoplastic resin is substantially the same as a second thermoplastic resin of said card comprising a built-in IC device.

**22.** The method of claim 12, wherein a thickness of said layer of said thermoplastic resin is in a range of from 5 to 200 $\mu$ m.

**23.** An apparatus for preparing an IC card comprising;
a) a means for forming an image in an image receiving material comprising an image receiving layer, and
b) a means for adhering the image receiving material having the formed image to a card comprising a built-in IC device.

FIG. 1

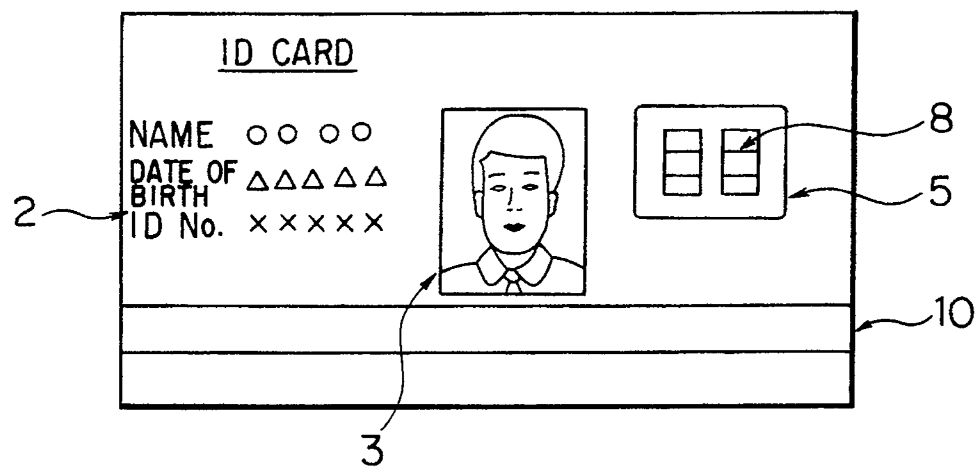


FIG. 2

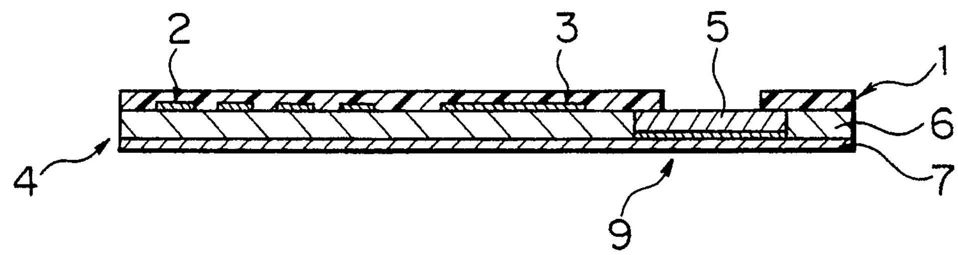


FIG. 3

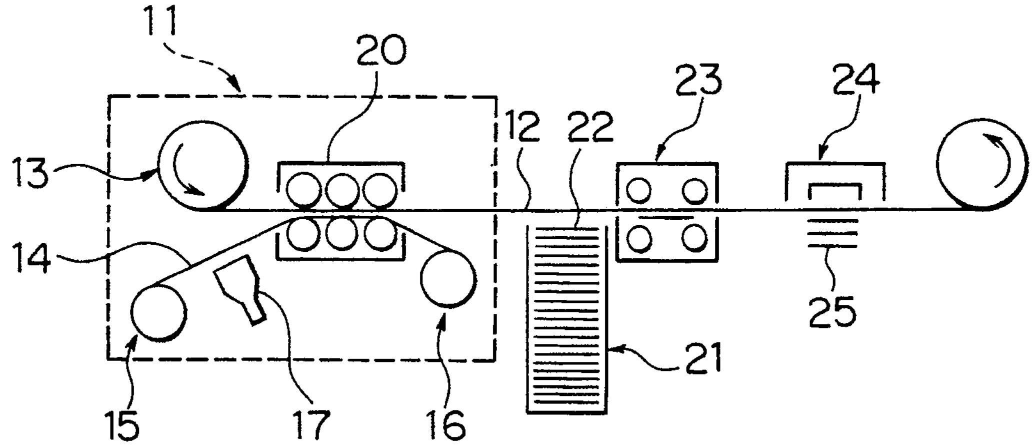

FIG. 4

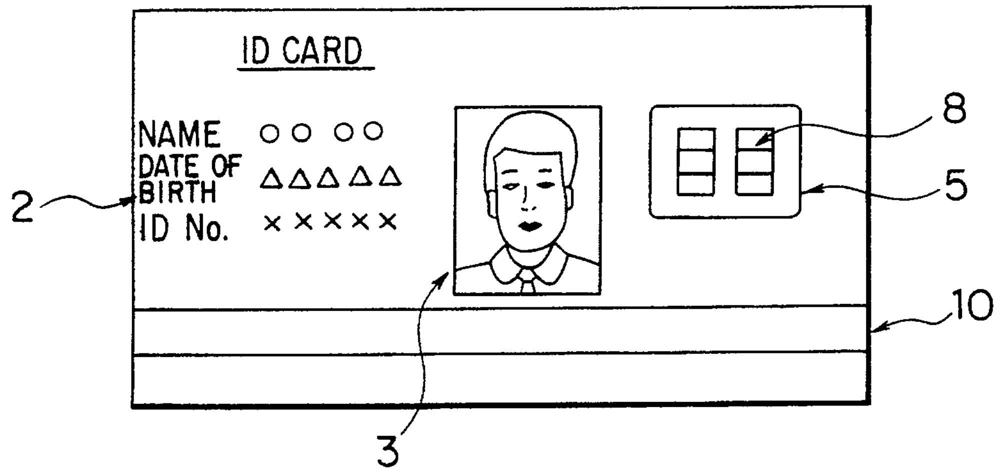


FIG. 5

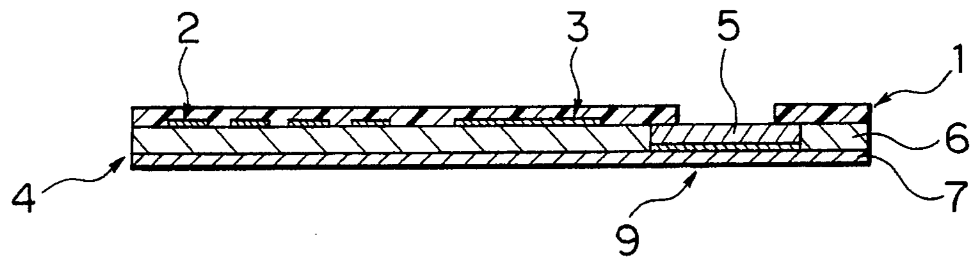


FIG. 6